(19) Europäisches Patentamt
European Patent Office
Office européen des brevets

(11) EP 1 964 029 B1

(12) **EUROPEAN PATENT SPECIFICATION**

(45) Date of publication and mention of the grant of the patent:
**20.07.2011 Bulletin 2011/29**

(21) Application number: **06835329.1**

(22) Date of filing: **21.12.2006**

(51) Int Cl.:
***G06K 17/00*** *(2006.01)*

(86) International application number:
**PCT/KR2006/005625**

(87) International publication number:
**WO 2007/073099 (28.06.2007 Gazette 2007/26)**

(54) **RFID SYSTEM**

RFID-SYSTEM

SYSTEME RFID

(84) Designated Contracting States:
**DE FR GB**

(30) Priority: **22.12.2005 KR 20050127405**
**15.12.2006 KR 20060128650**

(43) Date of publication of application:
**03.09.2008 Bulletin 2008/36**

(73) Proprietor: **LG Innotek Co., Ltd**
**Seoul 150-721 (KR)**

(72) Inventors:
- **KIM, Nam Yun**
  **Seongnam-si 462-121 (KR)**
- **LEE, Yong Hee**
  **Gyeonggi-do (KR)**
- **CHO, Young Bin**
  **Yongin-si 446-903 (KR)**
- **CHOI, Jae Yeon**
  **Seoul 150-751 (KR)**
- **SERGEY, Sergeyev**
  **Nizhny Novgorod 603105 (RU)**
- **ALEXANDER, Belonozhkin**
  **Nizhny Novgorod 603000 (RU)**

(74) Representative: **Bentz, Jean-Paul et al**
**Novograaf Technologies**
**122 Rue Edouard Vaillant**
**92593 Levallois-Perret Cedex (FR)**

(56) References cited:
**US-A1- 2003 040 275** **US-A1- 2004 254 829**
**US-A1- 2005 253 747**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to an RFID reader and an RFID tag.

### background Art

Recently, a Radio Frequency Identification (RFID) system has been widely used.

The RFID system includes a tag that includes detailed product information and is attached to the product, and a reader that reads information of the tag. For instance, patent application US 2005/253747 discloses a radio frequency identification reader and radio frequency identification tags. The known radio frequency identification reader comprises a transmitter, and antenna terminal, and a receiver. The known radio frequency identification tag comprises an antenna terminal, a memory, and a power unit.

The related art RFID system is designed in the framework of standards by ISO/IEC and EPCglobal based on one of the two algorithms: "slotted aloha" and "binary tree".

The standard based on the slotted aloha algorithm has low bit rate, and cannot individually identify a plurality of tags with a high recognition rate.

The standard based on the binary tree algorithms provides improved performance of allowing simultaneous identification of a number of tags at a low bit rate. Theoretically, the standard based on the binary tree algorithm can identify 1000 tags per second, but in actuality, the number of faultless tags that the standard based on the binary tree algorithm can identify per second is less than 100.

The binary tree algorithm defines simultaneous replies from a large number of tags in response to reader inquiry. In this case, the reader receives not-in-phase replies from a large quantity of tags. Hence, a joint reply received by the reader from the tags has the essential variation in received power. The variation value reaches about 40-50 dB. Thus, it is difficult to receive accurate replies even if noises or jams are absent.

Also, the standard based on the binary tree algorithm shows low reliability in recognition of tags in-group because the tag recognition is based on a complicated interactive procedure between the reader and the tags.

In the RFID system, a reader transmits a signal using an amplitude shift keying (ASK) signal, and a tag receives the ASK signal of the reader. The tag having received the ASK signal uses the ASK signal as power and simultaneously demodulates the ASK signal to transmit information requested by the reader.

In general, a passive tag converts the ASK signal through a voltage conversion circuit including a plurality of Shottky diodes, and uses the converted signal as power for reply. However, it takes a predetermined time to generate power from the ASK signal, which interrupts recognition of a large number of tags within a short period of time.

Also, when a large number of tags are present, and a distance between a reader and the tags is long or beyond a beam-width of an antenna, voltage drop occurs, and tag operation may not be made.

The simultaneous conversion and demodulation on the ASK signal may result in s ignal distortion.

### Disclosure of Invention

### Technical Problem

An embodiment of the present invention provides an RFID reader and an RFID tag performing communication using an orthogonal frequency division multiplexing (OFDM) signal.

An embodiment of the present invention provides an RFID reader and an RFID tag capable of minimizing power consumption of the tag.

An embodiment of the present invention provides an RFID reader and an RFID tag capable of improving reliability of tag identification.

An embodiment of the present invention provides an RFID reader and an RFID tag achieving a high identification rate.

An embodiment of the present invention provides an RFID reader and an RFID tag capable of increasing information capacity the tag.

An embodiment of the present invention provides a tag that can be produced at low costs.

### Technical Solution

In order to achieve one or several of these results, the invention is provided with the features defined in the claims.

## Advantageous Effects

An RFID system according to the embodiment of the present invention receives tag identification information of an OFDM format from a tag 110, and demodulates the received information in a reader 120, thereby identifying a plurality of tags 110 fast and accurately.
An RFID system according to the embodiment of the present invention may achieve simplification of a tag structure, and low-cost production of the tags.
An RFID system according to the embodiment of the present invention may propose a highly-informative protocol with a short OFDM symbol, thereby allowing reliable and fast tag identification.
An RFID system according to the embodiment of the present invention may allow sufficient information storage in the tag.
An RFID system according to the embodiment of the present invention may provide a passive tag with a single chip.
An RFID system according to the embodiment of the present invention can overcome a problem caused by different RFID frequencies in different countries in the world.

## Brief Description of the Drawings

Fig. 1 is a view showing an RFID system according to an embodiment of the present invention;
Fig. 2 is a view illustrating a structure of an identification interval;
Fig. 3 is a graph showing an identification error change with respect to the number of tags;
Fig. 4 is a block diagram showing a tag structure according to an embodiment of the of the clock extractor, and generating a frequency; a radio frequency up converter up-converting a signal output from the D/A converter, and allowing the up-converted signal to be transmitted through the antenna terminal; and a power unit supplying internal power.
The embodiment of the present invention provides a radio frequency identification reader comprising: a transmitter generating an energy pumping signal for power supply of a radio frequency identification tag and signal supply of a clock synchronization signal and an information request signal; an antenna terminal emitting output of the transmitter as a high frequency signal, and receiving an orthogonal frequency division multiplexing signal from the radio frequency identification tag; a receiver demodulating tag identification information from the orthogonal frequency division multiplexing signal received from the antenna terminal; and a microprocessor controlling the transmitter and processing a signal demodulated in the receiver.

## Advantageous Effects

An RFID system according to the embodiment of the present invention receives tag identification information of an OFDM format from a tag 110, and demodulates the received information in a reader 120, thereby identifying a plurality of tags 110 fast and accurately.
An RFID system according to the embodiment of the present invention may achieve simplification of a tag structure, and low-cost production of the tags.
An RFID system according to the embodiment of the present invention may propose a highly-informative protocol with a short OFDM symbol, thereby allowing reliable and fast tag identification.
An RFID system according to the embodiment of the present invention may allow sufficient information storage in the tag.
An RFID system according to the embodiment of the present invention may provide a passive tag with a single chip.
An RFID system according to the embodiment of the present invention can overcome a problem caused by different RFID frequencies in different countries in the world.

## Brief Description of the Drawings

Fig. 1 is a view showing an RFID system according to an embodiment of the present invention;
Fig. 2 is a view illustrating a structure of an identification interval;
Fig. 3 is a graph showing an identification error change with respect to the number of tags;
Fig. 4 is a block diagram showing a tag structure according to an embodiment of the <present invention;
Fig. 5 is a block diagram showing a modulator configuration according to an embodiment of the present invention;
Fig. 6 is a block diagram showing a tag structure according to another embodiment of the present invention;
Fig. 7 is a view illustrating an OFDM signal structure according to an embodiment of the present invention; and
Fig. 8 is a block diagram showing a configuration of an RFID reader according to an embodiment of the present invention.

## Best Mode for Carrying Out the Invention

An RFID system and an RFID tag according to embodiments of the present invention will now be described in detail with reference to accompanying drawings.

An RFID system according to the present invention provides reliable tag identification even if a plurality of tags are concentrated within a predetermined space such as a container. The present invention may allow the probability of error generation in identifying at least one tag not to exceed $10^{-6}$.

A passive tag is exemplified as a tag of the present invention. The passive tag has a very simple structure, and can be manufactured at an economical cost. Also, the present invention may be applied to an active tag having previously-charged internal power.

The present invention provides a new concept of an RFID system using an OFDM technique.

[Time Separation Technique]

An OFDM signal provides a solution to a problem of the related art RFID system.

First, the OFDM technology may transfer every information stored in a tag to one OFDM symbol.

Also, the OFDM symbol can be transferred within a very short period of time.

In addition, an OFDM signal can be transferred at a very short time interval. Thus, the ALOHA, the statistically anti-collision algorithm, can be effectively applied, and information can be read from a plurality of tags during one identification period using the time separation technique, thereby reducing the probability of error generation. Also, a power consumption problem of an active tag as well as a passive tag can be effectively solved.

Fig. 1 is a view showing an RFID system according to an embodiment of the present invention.

In the RFID system according to the present invention, a plurality of tags 110 and a reader 120 are connected through an OFDM signal network 200. In an embodiment of the present invention, passive tags may be taken as an example of the plurality of tags 110, and the plurality of tags 110 pass through an identification area identifiable by the reader in a space such as a container.

The reader 120 transmits an energy pumping signal during the whole identification period. The energy pumping signal is used for the power supply of the tag 110, and as a clock synchronization signal and an information request signal.

When the information request signal is received in accordance with the ALOHA algorithm, each of the tags 110 starts counting its own preinstalled pseudo random time interval.

The time slot of the interval is equal to the length of the OFDM symbol.

Thus, each of the tags 110 replies to the information request signal during its own time slot of total N time slots. The time interval including N time slots will now be referred to as a test frame in the present invention.

If two or more tags reply in the same time slot, those tags are not recognized during the test frame. This collision relates to an identification error.

The probability of the identification error during one test frame is very high. However, the probability of the identification error can be reduced when all the tags change their time slot numbers in a pseudo random way during the identification period including k test frames.

Fig. 2 is a view showing an identification interval structure.

The identification interval includes k test frames (TF), the length of the identification interval is one second, and each test frame has N time slots.

In Fig. 2, TSYMB is approximately 61 as an example. Here, TYMB denotes the duration including a guard interval (GI) and a single OFDM symbol.

The identification interval of the OFDM signal having such a configuration can be expressed by Equation 1 below.

$$k \times N \times T_{SYMB} \fallingdotseq 1 = \text{constant} \text{ --------------(Equation 1)}$$

where k is the number of test frames, N is the number of time slots included in one test frame, and TSYMB is the time required to transmit one OFDM symbol.

The constant '1' is the time it takes to receive information from the tags 110 of one group, and refers to one second as an example.

In Equation 1, varying the variables k and N in Equation 1 allows the total duration of the identification period to be maintained at one second while the identification error is minimized.

$$P_{error} \% n S \left[ 1 - \left( 1 - \frac{1}{N} \right)^{n-1} \right]^{k}$$

-------------(Equation 2)

Equation 2 is for calculating the probability of identification error. The number of the test frames (k) may range from 18 to 40. If 32 is selected as k, N becomes 512 according to Equation 2.

Here, the identification error varies according to the number of tags 110 (n) included in one group.

Fig. 3 is a view showing a identification error change according to the number of tags.

when the number of tags (n) is 400 or smaller, the probability of identification error is reduced to $10^{-6}$ or smaller. This result is provided by the time separation technique.

However, the result is obtained in the case where the OFDM symbol duration is set to 61 □, and it is possible to shorten the OFDM symbol duration. Then, the frequency band can be widened, but the number of time slots (N) and the number of test frames (k) can be increased. Thus, the number of tags included in one group can be increased, and the probability of the identification error can be reduced.

The time separation technique may expand into a frequency separation technique and a space separation technique.

[Frequency Separation Technique]

Tags can be uniformly distributed over a plurality of frequency sub-channels.

The time separation in each frequency channel is carried out in parallel and independently.

Thus, if four frequency channels are used and 250 tags are present in each frequency channel, then the probability of the error generation is $10^{-10}$.

In contrast, if the probability of the error generation is fixed to $10^{-6}$, then the number of tags in each frequency channel can be increased up to 1600.

[Space Separation Technique]

A tag group may be divided into a plurality of sub-groups using the space separation technique and reader antenna arrays.

The core of the space separation technique is an adaptive antenna array system and a control algorithm of multi-element antenna arrays.

The space separation technique allows separation of a narrow local space. Thus, sub-groups from the group of all the tags can be selected and identified. All the sub-groups can be identified in parallel, separately from other sub-groups.

To this end, scanning may be performed using a single bean antenna array system, or parallel processing of spatially separated tags may be performed using a multi beam antenna array.

[Tag structure]

Fig. 4 is a block diagram showing a tag structure according to an embodiment of the present invention, and Fig. 5 is a block diagram showing a modulator configuration according to an embodiment of the present invention.

The tag 110 according to the present invention includes an antenna 114, a power unit 118, a memory 111, a control logic 115, a modulator 112, a clock generator 116, a frequency synthesizer 117, and a radio frequency (RF) up converter 113.

The antenna 114 receives an information request signal received from a reader 120, or transmits tag identification information within the tag 110 in response to the information request signal.

The power unit 118 receives an energy pumping signal of the reader 120 transmitted from the antenna 114, and generates internal power. However, in the case of an active tag, power is previously charged and stored.

In the memory 111, tag identification information input from a code source such as a personal computer (PC) is stored. The tag identification information is stored with the code source transformed into a frequency domain. The tag identification information may include header information, product identification information, and error correction information. The header information may include information such as a code format, a code system version, a code length. The product identification information may include information such as a kind of a product to which a tag is attached, a price, an available period, and the place of origin. The error correction information may include information for correcting an error that may occur in a communication process.

The control logic 115 controls elements of the tag 110 so as to transmit tag identification information in response to the information request signal transmitted from the antenna 114. In the present invention, the control logic 115 may be selectively provided since the tag 110 transmits tag identification information stored in the memory 111 in response to the input energy pumping signal.

The control logic 115 may serve to count a preinstalled pseudo random time interval according to the above-described time separation technique.

The modulator 112 modulates the tag identification information stored in the memory 111 into an OFDM signal.

Referring to Fig. 5, the modulator 112 may include an encoder 1121, an interleaver 1122, an inverse fast Fourier transformer (IFFT) 1123, a guard interval inserting unit 1124, and a D/A converter 1125.

The encoder 1121 encodes the tag identification information, and outputs a code symbol. The encoder 1121 outputs a code symbol capable of forward error correction (FEC).

The interleaver 1122 performs interleaving on the code symbol output from the encoder 1121 according to a given rule so as to guard against burst errors, and outputs a signal of the interleaved code symbol.

The IFFT 1123 performs inverse fast Fourier transform on the signal output from the interleaver 1122 to modulate the signal into a subcarrier to provide orthogonality thereto in a frequency area.

The guard interval inserting unit 1124 inserts a guard interval in order to attenuate influence of multipath interference.

A signal output from the guard interval inserting unit 1124 becomes a signal transformed into a time domain.

The D/A converter 1125 converts a digital signal into an analog signal, and outputs the converted signal.

The clock generator 116 generates a clock on the basis of a signal received from the antenna 114. For example, a TXCO may be used as the clock generator 116.

The frequency synthesizer 117 generates a predetermined frequency.

The RF up converter 113 up-converts a signal output from the modulator 112 to transmit the signal through the antenna 114.

The tag 110 needs the modulator 112 in order to generate an OFDM signal, but the modulator 112 obstructs manufacturing of a tag having a low price and low power consumption. Therefore, there is a need to simplify a design of the modulator 112.

Unlike other kinds of wireless communication, the tag 110 applied to the RFID system includes digital information pre-defined and pre-stored in the tag 110.

Accordingly, by considering this characteristic of the tag 110, the tag 110 with a simpler structure can be provided.

Fig. 6 is a block diagram showing a tag structure according to another embodiment of the present invention.

As for a tag shown in Fig. 6, only differences with the tag of Figs. 4 and 5 will be described.

The tag 110 of Fig. 6 has a much simpler structure than the structure of the tag 110 shown in Figs. 4 and 5.

Particularly, in the tag 110 of Fig. 6, a configuration of the modulator 112 is greatly simplified, and only a D/A converter 1125 is present.

As mentioned above, the tag 110 applied to the RFID system has a pre-stored information, unlike the other wireless communication. Thus, information transformed from the code source 130 of a PC 130 into a frequency domain and a time domain is stored in the memory 111.

That is, the tag 110 stores desired digital information in the memory 111 using a software tool in a tag production line. At this time, the desired digital information is transformed into the frequency domain and the time domain, and is pre-stored.

Accordingly, the tag 110 does not need a configuration of the encoder 1121, the interleaver 1122, the IFFT 1123, and the guard interval inserting unit 1124, and thus can have a simple structure.

Also, unlike the tag 110 of Figs. 4 and 5, the tag 110 shown in Fig. 6 does not use the clock generator such as the TXCO, but extracts an internal clock signal from an external low frequency energy pumping signal from the reader 120 using a clock extractor 119.

By not using the clock generator, the price and the size of the tag can be reduced. In this case, the tag 110 may include just an antenna and a chip, which allows production of the tag 110 having a very small size.

Also, when the clock generator is not used, problems may be solved, which are caused since UHF frequency bands allocated for RFID systems are different in different countries.

For example, Korea uses a frequency band of 908 - 914 MHz, Japan uses 950 ~ 956 MHz, and Europe uses a frequency band of 862-870 MHz.

For this reason, if goods exported from Europe to Japan via Korea have tags suitable for the frequency band in Europe, tag information of the goods cannot be read in Korea and Japan.

In the present invention, a Tx frequency of the tag 110 may be formed by the frequency synthesizer 117, which is the simplest phase locked loop (PLL) synthesizer. The frequency synthesizer 117 may generate a frequency of 860 ~ 960 MHz to cover the RFID frequency bands of each country.

A reference frequency of the frequency synthesizer 117 is determined by an energy pumping signal of the reader 120.

The frequency of the energy pumping signal can vary depending on an RFID frequency range in each country.

In the present invention, the ratio between the Tx frequency of the tag 110 and the energy pumping frequency is fixed by the same frequency divider coefficient in every country in the world.

For example, assuming that the frequency divider coefficient for the frequency synthesizer 117 is 100, the energy pumping signal may be set to 8.62 ~ 8.7 MHz in Europe, 9.08 - 9.14 MHz in Korea, and 9.50 ~ 9.56 MHz in Japan.

In this case, the only difference is in frequency-time scales (frequency bandwidth and duration of OFDM symbol), but the difference is smaller than ±4%.

The frequency synthesizer 117 synthesizes the frequency by applying the frequency divider coefficient to the frequency extracted from the energy pumping signal. As mentioned above, the frequency synchronizer 117 can generate the frequency of 860 ~ 960 MHz so as to cover the RFID frequency band used in each country.

For example, the same tag 110 can be used in both Europe and Japan as a signal readable by a reader 120 of a corresponding country is transmitted according to a frequency extracted from each energy pumping signal.

Accordingly, one tag 110 can perform communication with every reader 120 of each country.

Fig. 7 is a view showing an OFDM signal structure according to an embodiment of the present invention.

Parameters of the OFDM signal are proposed in Table 1 below.

Table

| Parameter | Marking) | Value |
|---|---|---|
| Frequency band | fO | 860-960MHz |
| Subcarrier spacing | ΔF | 20kHz |
| Sampling frequency | FSAMPLE | 5.12MHz |
| Symbol length | TSYMB | 50□ |
| Guard Interval length | TGI | 11□ |
| Spectrum width | Δf | 5.1MHz, |
| number of pilot subcarriers | NSP | 4 |
| Number of data subcarriers | NSD | 248 |
| Subcarriers modulation | | QPSK |
| FEC | | 1/2 or 1/4 |
| Tag information capacity | Bit | 248 or 368 |

Fig. 8 is a block diagram of a reader configuration of an RFID system according to an embodiment of the present invention.

The reader 120 includes a memory 121, a microprocessor 122, a transmitter 123, a receiver 125, and an antenna 124.

The transmitter 123 generates an energy pumping signal for power supply of tag 110 and for signal supply of a clock synchronization signal and an information request signal.

The antenna 124 is for emission of a high frequency signal to the tag 110. For the above-described space separation technique, the antenna 124 may emit a high frequency signal by scanning using the single beam antenna array system, or may emit a high frequency signal in parallel to spatially separated tags using the multi beam antenna array system.

The receiver 125 demodulates tag identification information of an OFDM format transmitted from the tag 110. Specifically, the receiver 125 may include a guard interval deleter, a fast Fourier transformer (FFT), a deinterleaver, and a decoder.

That is, the receiver 125 decodes an OFDM signal transmitted from the tag 110.

The microprocessor 122 processes information received through the the receiver 125 and transmitting to the transmitter 123.

The memory 121 stores tag identification information received from the tag 110.

The RFID system according to the embodiment of the present invention receives tag identification information of the OFDM format from the tag 110, and demodulates the received information in the reader 120, thereby identifying a plurality of tags 110 fast and accurately.

The RFID system according to the embodiment of the present invention may achieve simplification of a tag structure, and low-cost production of the tags.
The RFID system according to the embodiment of the present invention may propose a high-informative protocol with a short OFDM symbol, thereby allowing reliable and fast tag identification.
The RFID system according to the embodiment of the present invention may allow sufficient information storage in the tag.
The RFID system according to the embodiment of the present invention may provide a passive tag with a single chip.
The RFID system according to the embodiment of the present invention can overcome a problem caused by different RFID frequencies in different countries in the world.

**Industrial Applicability**

The present invention may be applied to a variety of fields to which the RFID system is applicable.

**Claims**

1. A radio frequency identification tag comprising:

   an antenna (114) terminal through which an energy pumping signal is received and tag identification information is transmitted;
   a memory (111) in which the tag identification information is stored; and a power unit (118) supplying internal power, **characterized in that** it further comprises :

      a modulator (112) modulating the tag identification information into an orthogonal frequency division multiplexing signal in response to an information request signal included in the energy pumping signal;
      a clock generator (116) generating a clock according to a clock synchronization signal included in the energy pumping signal;
      a frequency synthesizer (117) operated according to the clock of the clock generator and generating a frequency; and
      a radio frequency up converter (113) up-converting a signal output from the modulator and allowing the signal to be transmitted through the antenna terminal;.

2. The radio frequency identification tag according to claim 1, wherein the power unit (118) generates internal power using an energy pumping signal received through the antenna terminal (114).

3. The radio frequency identification tag according to claim 1, wherein the power unit (118) has power that is previously charged and stored.

4. The radio frequency identification tag according to claim 1, wherein the tag identification information is transformed into a frequency domain and is stored in the memory (111).

5. The radio frequency identification tag according to claim 1, wherein the Modulator (112) includes an encoder (1121) outputting a code symbol having a forward error correction function;
   an interleaver (1122) interleaving the code symbol and outputting a signal of the interleaved code symbol;
   an inverse fast Fourier transformer (1123) performing inverse fast Fourier transform on the signal output from the interleaver to modulate the signal into a subcarrier;
   a guard interval inserting unit (1124) inserting a guard interval to attenuate an influence of multipath interference; and
   a D/A converter (1125) converting a signal output from the guard interval inserting unit into an analog signal.

6. The radio frequency identification tag according to claim 1, comprising a logic circuit (115) performing control to count a preinstalled time interval and to transmit the tag identification information with time delay.

7. The radio frequency identification tag according to claim 1, wherein the tag identification information is included in one orthogonal frequency division multiplexing signal.

8. A radio frequency identification tag comprising:

an antenna terminal (114) through which an energy pumping signal is received and tag identification information is transmitted;
a memory (111) in which the tag identification information is stored; and a power unit (118) supplying internal power, **characterized in that** it further comprises :

a D/A converter (1125) converting the tag identification information into an analog signal in response to an information request signal included in the energy pumping signal;
a clock extractor (119) extracting a clock signal from the energy pumping signal;
a frequency synthesizer (117) operated according to the clock signal of the clock extractor, and generating a frequency; and
a radio frequency up converter (113) up-converting a signal output from the D/A converter, and allowing the up-converted signal to be transmitted through the antenna terminal.

**9.** The radio frequency identification tag according to claim 8, wherein the power unit (118) generates internal power using an energy pumping signal received through the antenna terminal (114).

**10.** The radio frequency identification tag according to claim 8, wherein the power unit (118) has power that is previously charged and stored.

**11.** The radio frequency identification tag according to claim 8, wherein the tag identification information is modulated into an orthogonal frequency division multiplexing signal, is transformed into a time domain, and is stored in the memory (111).

**12.** The radio frequency identification tag according to claim 11, wherein the tag identification information is included in one orthogonal frequency division multiplexing symbol.

**13.** The radio frequency identification tag according to claim 8, comprising a logic circuit (115) performing control to count a preinstalled time interval and to transmit the tag identification information with time delay.

**14.** The radio frequency identification tag according to claim 8, wherein the frequency synthesizer (117) generates a frequency ranging from 860 to 960 MHz.

**15.** The radio frequency identification tag according to claim 8, wherein the frequency synthesizer (117) generates a frequency varying according to an input energy pumping signal.

**16.** A radio frequency identification reader comprising:

a transmitter (123) generating an energy pumping signal for power supply of a radio frequency identification tag and signal supply of a clock synchronization signal and an information request signal;
an antenna terminal (124) emitting output of the transmitter as a high frequency signal, and receiving an orthogonal frequency division multiplexing signal from the radio frequency identification tag;
a receiver (125) demodulating tag identification information from the orthogonal frequency division multiplexing signal received from the antenna terminal; and
a microprocessor (122) controlling the transmitter and processing a signal demodulated in the receiver.
**characterized in that** the receiver comprises a guard interval deleter, a fast Fourier transformer, a deinterleaver, and a decoder.

**17.** The radio frequency identification reader according to claim 16, wherein the antenna terminal (124) performs scanning using a single beam antenna array system, and emits a high-frequency signal.

**18.** The radio frequency identification reader according to claim 16, wherein the antenna terminal (124) emits a high-frequency signal in parallel to spatially separated tags using a multi beam antenna array system.

**19.** The radio frequency identification reader according to claim 16, comprising a memory (121) in which the demodulated tag identification information is stored.

**Patentansprüche**

1. Radiofrequenz-Identifikationsetikett mit:

   einem Antennenanschluss (114), über welchen ein Energie-Anregungssignal erhalten wird und eine Etikett-Identifikationsinformation übertragen wird;
   einem Speicher (111), in welchem die Etikett-Identifikationsinformation gespeichert wird; und einer Energieeinheit (118), die eine interne Energie liefert, **dadurch gekennzeichnet, dass** dieses ferner umfasst:

      einen Modulator (112), der die Etikett-Identifikationsinformation in Reaktion auf ein in dem Energie-Anregungssignal enthaltenes Informationsanfragesignal in ein Orthogonal-Frequenzmultiplexsignal moduliert;
      einen Taktgenerator (116), der eine Taktfrequenz erzeugt, die einem in dem Energie-Anregungssignal enthaltenen Takt-Synchronisationssignal entspricht;
      einen Frequenzsynthesizer (117), der entsprechend der Taktfrequenz des Taktgenerators arbeitet und eine Frequenz erzeugt; und
      einen Hochfrequenz-Aufwärtswandler (113), der einen Signalausgang vom Modulator aufwärts wandelt und erlaubt, dass das Signal über den Antennenanschluss übertragen wird.

2. Radiofrequenz-Identifikationsetikett nach Anspruch 1, in welchem die Energieeinheit (118) die interne Energie unter Verwendung eines über den Antennenanschluss (114) erhaltenen Energie-Anregungssignals erzeugt.

3. Radiofrequenz-Identifikationsetikett nach Anspruch 1, in welchem die Energieeinheit (118) eine Energie hat, die vorher geladen und gespeichert wird.

4. Radiofrequenz-Identifikationsetikett nach Anspruch 1, in welchem die Etikett-Identifikationsinformation in einen Frequenzbereich umgeformt und in dem Speicher (111) gespeichert wird.

5. Radiofrequenz-Identifikationsetikett nach Anspruch 1, in welchem der Modulator (112) einen Kodierer (1121) enthält, der ein Code-Symbol mit einer vorwärts gerichteten Fehlerkorrekturfunktion ausgibt;
   einen Verschachteler (1122), der das Code-Symbol verschachtelt und ein Signal des verschachtelten Code-Symbols ausgibt;
   einen inversen schnellen Fourier-Transformer (1123), der eine inverse schnelle Fouriert-Transformation an dem Signalausgang vom Verschachteler durchführt, um das Signal in einen Unterträger zu modulieren;
   eine Schutzintervall-Einfügeeinheit (1124), die ein Schutzintervall einfügt, um den Einfluss einer Mehrwegeinterferenz zu verkleinern; und
   einen D/A-Wandler (1125), der einen Signalausgang von der Schutzinervall-Einfügeeinheit in ein analoges Signal wandelt.

6. Radiofrequenz-Identifikationsetikett nach Anspruch 1, mit einer Logikschaltung (115), die eine Steuerung durchführt, um ein vorinstalliertes Zeitintervall zu zählen und die Etikett-Identifikationsinformation mit einer Zeitverzögerung zu übertragen.

7. Radiofrequenz-Identifikationsetikett nach Anspruch 1, in welchem die Etikett-Identifikationsinformation in einem Orthogonal-Frequenzmultiplexsignal enthalten ist.

8. Radiofrequenz-Identifikationsetikett mit:

   einem Antennenanschluss (114), über welchen ein Energie-Anregungssignal erhalten wird und eine Etikett-Identifikationsinformation übertragen wird;
   einem Speicher (111), in welchem die Etikett-Identifikationsinformation gespeichert wird; und einer Energieeinheit (118), welche eine interne Energie liefert, **dadurch gekennzeichnet, dass** dieses ferner umfasst:

      einen D/A-Wandler (1125), welcher in Reaktion auf ein in dem Energie-Anregungssignal enthaltenes Informationsanforderungssignal die Etikett-Identifikationsinformation in ein analoges Signal umwandelt;
      einen Taktextrahierer (119), der ein Taktsignal aus dem Energieanregungssignal extrahiert;
      einen Frequenzsynthesizer (117), der entsprechend dem Taktsignal des Taktextrahierers arbeitet und eine Frequenz erzeugt; und
      einen Hochfrequenz-Aufwärtswandler (113), der einen Signalausgang vom D/A-Wandler aufwärts wandelt und erlaubt, dass das aufwärts gewandelte Signal über den Antennenanschluss übertragen wird.

**9.** Radiofrequenz-Identifikationsetikett nach Anspruch 8, in welchem die Energieeinheit (118) unter Verwendung eines über den Antennenanschluss (114) erhaltenen Energie-Anregungssignals eine interne Energie erzeugt.

**10.** Radiofrequenz-Identifikationsetikett nach Anspruch 8, in welchem die Energieeinheit (118) eine Energie hat, die vorher geladen und gespeichert wird.

**11.** Radiofrequenz-Identifikationsetikett nach Anspruch 8, in welchem die Etikett-Identifikationsinformation in ein Orthogonal-Frequenzmultiplexsignal moduliert wird, in einen Zeitbereich transformiert wird und in dem Speicher (111) gespeichert wird.

**12.** Radiofrequenz-Identifikationsetikett nach Anspruch 11, in welchem die Etikett-Identifikationsinformation in einem Orthogonal-Frequenzmultiplexsymbol enthalten ist.

**13.** Radiofrequenz-Identifikationsetikett nach Anspruch 8, mit einer Logikschaltung (115), welche eine Steuerung durchführt, um ein vorbestimmtes Zeitintervall zu zählen und die Etikett-Identifikationsinformation mit Zeitverzögerung zu übertragen.

**14.** Radiofrequenz-Identifikationsetikett nach Anspruch 8, in welchem der Frequenzsynthesizer (117) eine Frequenz im Bereich von 860 bis 960 MHz erzeugt.

**15.** Radiofrequenz-Identifikationsetikett nach Anspruch 8, in welchem der Frequenzsynthesizer (117) eine Frequenz erzeugt, die entsprechend einem Eingangsenergie-Anregungssginal variiert.

**16.** Radiofrequenz-Identifikationslesung mit einem Transmitter (123), der ein Energie-Anregungssginal zur Energieversorgung eines Radiofrequenz-Informationsetiketts und zur Signalversorgung mit einem Takt-Synchronisationssignal und einem Informationsanfragesignal erzeugt;
einem Antennenanschluss (124), der eine Ausgabe des Transmitters als ein Hochfrequenzsignal sendet und ein Orthogonal-Frequenzmultiplexsignal von dem Radiofrequenz-Indentifikationsetikett empfängt;
einem Empfänger (125), der die Etikett-Identifikationsinformation aus dem vom Antennenanschluss erhaltenen Orthogonal-Frequenzmultiplexsignal demoduldiert; und
einem Mikroprozessor (122), der den Transmitter steuert und ein in dem Empfänger demoduliertes Signal verarbeitet, **dadurch gekennzeichnet, dass** der Empfänger eine Schutzintervall-Aufhebungseinrichtung, einen schnellen Fourier-Transformer, einen Entschachteler und einen Dekodierer umfasst.

**17.** Radiofrequenz-Identifikationsleseeinrichtung nach Anspruch 16, in welcher der Antennenanschluss (124) unter Verwendung eines Einstrahl-Antennensystems einen Scann-Vorgang durchführt und ein Hochfrequenzsignal sendet.

**18.** Radiofrequenz-Identifikationsleseeinrichtung nach Anspruch 16, in welcher der Antennenanschluss (124) unter Verwendung eines Mehrstrahl-Antennengruppensystems ein Hochfrequenzsignal parallel zu räumlich getrennten Etiketten sendet.

**19.** Radiofrequenz-Identifikationsleseeinrichtung nach Anspruch 16, mit einem Speicher (121), in welchem die demodulierte Etikett-Identifikationsinformation gespeichert ist.

## Revendications

**1.** Etiquette d'identification par radio fréquence comprenant :

une borne d'antenne (114) à travers laquelle un signal de pompage d'énergie est reçu et une information d'identification de l'étiquette est transmise ;
une mémoire (111) dans laquelle l'information d'identification de l'étiquette est stockée ; et une unité de puissance (118) alimentant une puissance interne, **caractérisé en ce qu'**elle comprend en outre :

un modulateur (112) modulant l'information d'identification de l'étiquette en un signal de multiplexage par répartition orthogonale de la fréquence en réponse à un signal de demande d'information compris dans le signal de pompage d'énergie ;
un générateur d'horloge (116) générant une horloge selon un signal de synchronisation d'horloge compris dans le signal de pompage d'énergie ;
un synthétiseur de fréquence (117) qui fonctionne selon l'horloge du générateur d'horloge et générant une fréquence ; et
un convertisseur ascendant (113) de fréquence radio convertissant de manière ascendante un signal délivré en sortie du modulateur et permettant la transmission du signal à travers la borne d'antenne.

**2.** Etiquette d'identification par radio fréquence selon la revendication 1, dans laquelle l'unité de puissance (112) génère une puissance interne en utilisant un signal de pompage d'énergie reçu à travers la borne d'antenne (114).

**3.** Etiquette d'identification par radio fréquence selon la revendication 1, dans laquelle l'unité de puissance (118) a de la puissance qui est antérieurement chargée et stockée.

**4.** Etiquette d'identification par radio fréquence selon la revendication 1, dans laquelle l'information d'identification de l'étiquette est transformée dans un domaine fréquentiel et est stockée dans la mémoire (111).

**5.** Etiquette d'identification par radio fréquence selon la revendication 1, dans laquelle le modulateur (112) comprend un encodeur (1121) délivrant en sortie un symbole de code comprenant une fonction de correction d'erreurs sans voie de retour ;
un dispositif entrelaceur (1122) entrelaçant le symbole de code et délivrant en sortie un signal du symbole de code entrelacé ;
un dispositif de transformation (1123) de type transformée de Fourier rapide inverse réalisant une transformée de Fourier rapide inverse sur le signal délivré en sortie du dispositif entrelaceur pour moduler le signal en une sous-porteuse ;
une unité d'insertion d'intervalle de garde (1124) insérant un intervalle de garde afin d'atténuer l'influence d'une interférence due à la propagation par trajets multiples ; et
un convertisseur numérique/analogique (1125), dit convertisseur D/A, convertissant un signal délivré en sortie de l'unité d'insertion d'intervalle de garde en un signal analogique.

**6.** Etiquette d'identification par radio fréquence selon la revendication 1, comprenant un circuit logique (115) réalisant une commande pour mesurer un intervalle temporel préinstallé et pour transmettre l'information d'identification de l'étiquette avec un retard temporel.

**7.** Etiquette d'identification par radio fréquence selon la revendication 1, dans laquelle l'information d'identification de l'étiquette est incluse dans un signal de multiplexage par répartition orthogonale de la fréquence.

**8.** Etiquette d'identification par radio fréquence comprenant :

une borne d'antenne (114) à travers laquelle un signal de pompage d'énergie est reçu et une information d'identification de l'étiquette est transmise ;
une mémoire (111) dans laquelle l'information d'identification de l'étiquette est stockée ; et une unité de puissance (118) alimentant une puissance interne, **caractérisée en ce qu'**elle comprend en outré :

un convertisseur numérique/analogique (1125), dit convertisseur D/A, convertissant l'information d'identification de l'étiquette en un signal analogique en réponse à un signal de demande d'information compris dans le signal de pompage d'énergie ;
un extracteur d'horloge (119) extrayant un signal d'horloge à partir du signal de pompage d'énergie ;
un synthétiseur de fréquence (117) fonctionnant selon le signal d'horloge de l'extracteur d'horloge et générant une fréquence ; et
un convertisseur ascendant (113) de fréquence radio convertissant de manière ascendante un signal délivré en sortie du convertisseur D/A, et permettant la transmission du signal ayant subi la conversion ascendante à travers la borne d'antenne.

**9.** Etiquette d'identification par radio fréquence selon la revendication 8, dans laquelle l'unité de puissance (118) génère une puissance interne en utilisant un signal de pompage d'énergie reçu à travers la borne d'antenne (114).

**10.** Etiquette d'identification par radio fréquence selon la revendication 8, dans laquelle l'unité de puissance (118) a une puissance qui est antérieurement chargée et stockée.

**11.** Etiquette d'identification par radio fréquence selon la revendication 8, dans laquelle l'information d'identification de l'étiquette est modulée en un signal de multiplexage par répartition orthogonale de la fréquence, est transformé dans un domaine temporel, et est stockée dans la mémoire (111).

**12.** Etiquette d'identification par radio fréquence selon la revendication 11, dans laquelle l'information d'identification de l'étiquette est comprise dans un symbole de multiplexage par répartition orthogonale de la fréquence.

**13.** Etiquette d'identification par radio fréquence selon la revendication 8, comprenant un circuit logique (115) réalisant une commande pour mesurer un intervalle temporel préinstallé et pour transmettre l'information d'identification de l'étiquette avec un retard temporel.

**14.** Etiquette d'identification par radio fréquence selon la revendication 8, dans laquelle le synthétiseur de fréquence (117) génère une fréquence qui se trouve dans la plage de 860 à 960 MHz.

**15.** Etiquette d'identification par radio fréquence selon la revendication 8, dans laquelle le synthétiseur de fréquence (117) génère une fréquence qui varie suivant un signal de pompage d'énergie d'entrée.

**16.** Lecteur d'identification par radiofréquence comprenant :

un transmetteur (123) générant un signal de pompage d'énergie pour réaliser une alimentation en puissance d'une étiquette d'identification par radio fréquence et une alimentation en signal d'un signal de synchronisation d'horloge et d'un signal de demande d'information ;
une borne d'antenne (124) émettant une sortie du transmetteur sous forme de signal haute fréquence, et recevant un signal de multiplexage par répartition orthogonale de la fréquence à partir de l'étiquette d'identification par radio fréquence ;
un récepteur (125) démodulant l'information d'identification de l'étiquette à partir du signal de multiplexage par répartition orthogonale de la fréquence reçu de la borne d'antenne ; et
un microprocesseur (122) commandant le transmetteur et traitant un signal démodulé dans le récepteur.
**caractérisé en ce que** le récepteur comprend un dispositif de suppression d'intervalle de garde, un dispositif de transformation de type transformée de Fourier rapide, un dispositif désentrelaceur, et un décodeur.

**17.** Lecteur d'identification par radiofréquence selon la revendication 16, dans lequel la borne d'antenne (124) effectue un balayage en utilisant un système à réseau d'antennes à faisceau unique, et émet un signal haute fréquence.

**18.** Lecteur d'identification par radio fréquence selon la revendication 16, dans lequel la borne d'antenne (124) émet un signal haute fréquence en parallèle avec des étiquettes séparées dans l'espace en utilisant un système à réseau d'antennes multi-faisceaux.

**19.** Lecteur d'identification par radiofréquence selon la revendication 16, comprenant une mémoire (121) dans laquelle est stockée l'information d'identification de l'étiquette démodulée.

[Fig. 1]

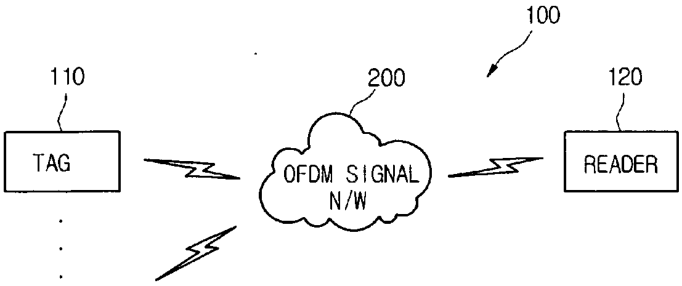


[Fig. 2]

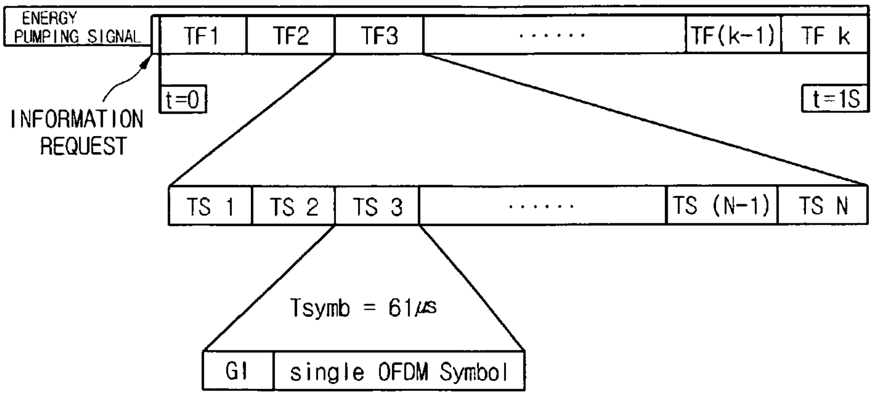


[Fig. 3]

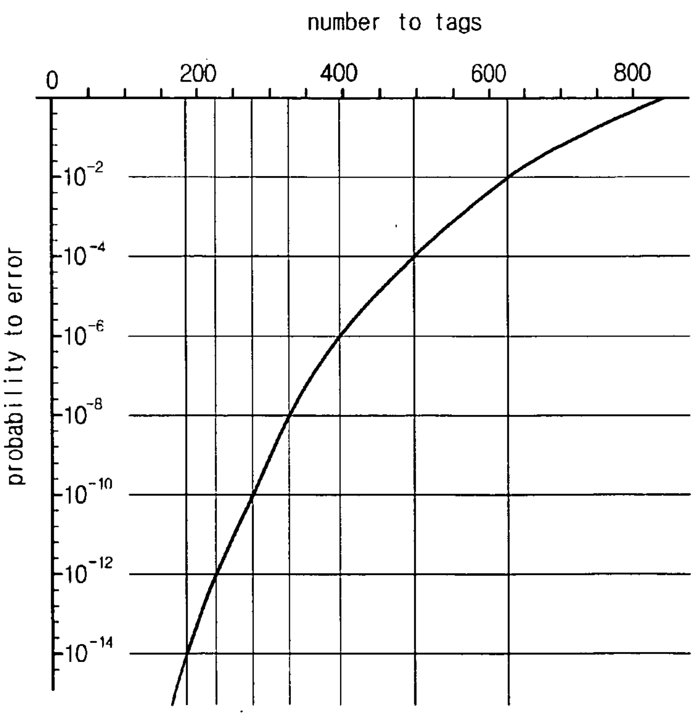

[Fig. 4]

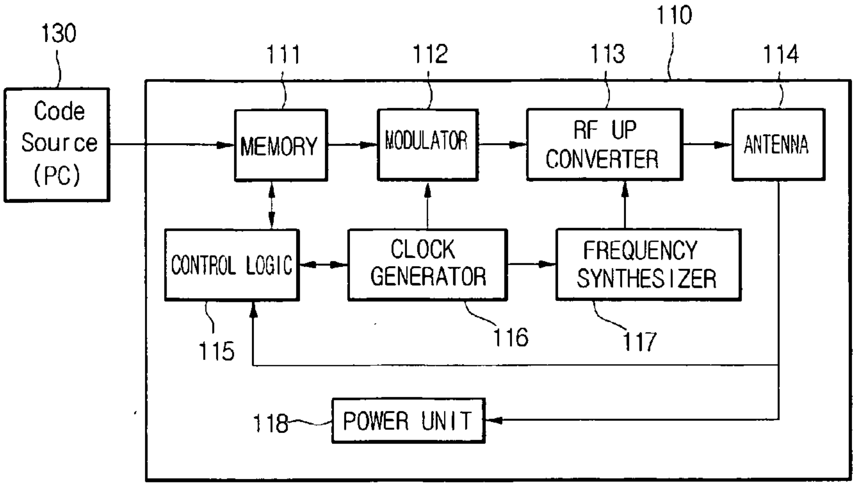


[Fig. 5]

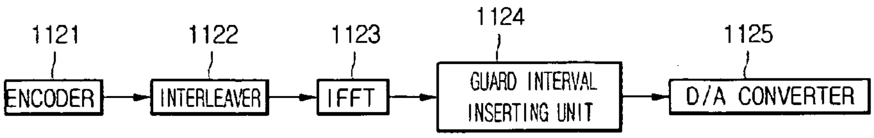


[Fig. 6]

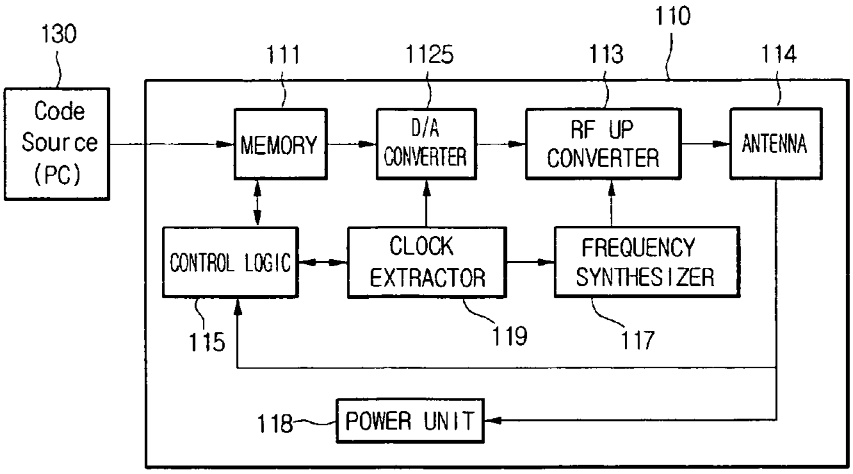


[Fig. 7]

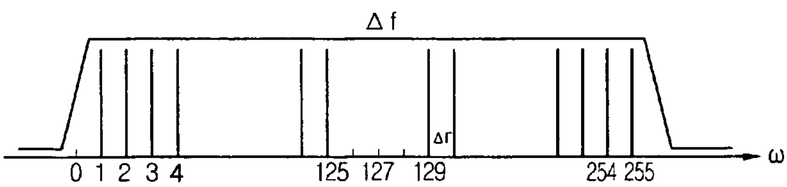

[Fig. 8]

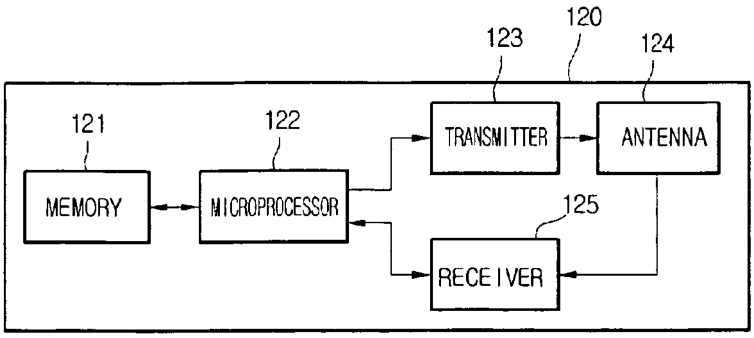
120
123
124
121
122
125
MEMORY
MICROPROCESSOR
TRANSMITTER
ANTENNA
RECEIVER

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2005253747 A